# EUROPEAN PATENT APPLICATION

(11) **EP 2 738 402 A1**
(43) Date of publication of application: **04.06.2014**
(21) Application number: 13170199.7
(22) Date of filing: 03.06.2013
(51) Int. Cl.: F16B 47/00, A01K 63/00

(54) **Device for fixing apparatuses for aquariums, aqua-terrariums and the like to a surface of said aquarium, aqua-terrarium or the like**

(30) Priority: 30.11.2012 IT PD20120359
(71) Applicant: Eden SRL, 36050 Cartigliano (IT)
(72) Inventor: Lolato, Samuele, 36020 Pove del Grappa VI (IT)
(74) Representative: Modiano, Micaela Nadia

(57) **Abstract**

A device (10) for fixing apparatuses (11) for aquariums, aqua-terrariums and the like to a surface of the aquarium (12), aqua-terrarium or the like, of the type comprising at least two suction cups (13, 14) fixed to a supporting portion (15) of an apparatus for aquariums (11), aqua-terrariums or the like, each suction cup (13, 14) comprising a central part (16, 17) for fixing to the supporting portion (15) of the apparatus (11), and a partial vacuum dome (18, 19) adapted to be pressed against an adhesion surface (20, 21) of the aquarium (12), aqua-terrarium or the like.

Each suction cup (13, 14) has, at its central part (16, 17), an orifice (22, 23) for the passage of fluids, which is blocked by a corresponding flow control element (24, 25), the latter being supported by means (26, 27) for its reversible movement in a direction for the at least partial opening of the orifice (22, 23).

## Description

The present invention relates to a device for fixing apparatuses for aquariums, aqua-terrariums and the like to a surface of said aquarium, aqua-terrarium or the like.

Currently, apparatuses installed inside aquariums, aqua-terrariums and the like, such as recirculation pumps, cartridge filters, heaters and the like, are fixed to the internal surface of the tank generally by means of suction cups.

Although the use of suction cups is preferred for simplicity and low cost, it can entail problems during removal of the apparatus, i.e., during the separation of said suction cups, said separation being necessary during the periodic maintenance and cleaning of the tank or of the apparatus itself.

Normally the suction cups are in fact difficult to access, since they are arranged between the apparatus itself and the surface to which the suction cups adhere.

Currently, in order to detach a suction cup, the most effective system is to provide the suction cup, at its edge, with a peduncle that can be pulled manually, allowing the air or water to enter the partial vacuum dome of the suction cup, detaching it.

The use of this peduncle system, despite being widespread, entails a series of drawbacks, first of all high inconvenience in actuation.

The use of this system in fact requires resorting to both hands, since it is necessary to detach one suction cup at a time, with one hand holding the apparatus and the other hand acting on the peduncle of a first suction cup, and then proceeding subsequently, in the same manner, for the separation of a second suction cup, therefore with the risk that while one suction cup is being detached, due to lack of skill, a suction cup that had already been detached becomes reattached.

Moreover, if the removal of a plurality of suction cups is not complete, the user runs the risk, when pulling the apparatus toward himself, of unintentionally dragging the tank that contains it by means of that single suction cup that inadvertently might have reattached to the tank itself, thus endangering the integrity of the tank and of its contents.

Furthermore, removal is currently rendered more complicated because, due to cleaning and design issues, the apparatuses are increasingly frequently placed in points of the aquarium or of the aqua-terrarium that cannot be accessed easily by the hands of the end user, and the only system for detaching the suction cups is to pull very forcefully, causing sudden detachments that can cause damage of various kinds to the product or to someone who is using it.

The aim of the present invention is to provide a device for fixing apparatuses for aquariums, aqua-terrariums and the like to a surface of said aquarium, aqua-terrarium and the like that is capable of obviating the drawbacks exhibited by known systems.

Within this aim, an object of the invention is to provide a fixing device that can be handled easily even with one hand.

Another object of the invention is to provide a fixing device that is simple and immediately usable in an intuitive manner.

A further object of the invention is to provide a fixing device that allows quick and safe removal of an apparatus from the tank in which it is inserted.

Another object of the invention is to provide a device for fixing apparatuses for aquariums, aqua-terrariums and the like to a surface of the aquarium, aqua-terrarium or the like that can be manufactured with known systems and technologies.

This aim, as well as these and other objects that will become more apparent hereinafter, are achieved by a device for fixing apparatuses for aquariums, aqua-terrariums and the like to a surface of said aquarium, aqua-terrarium or the like, of the type comprising at least two suction cups that are fixed to a supporting portion of an apparatus for aquariums, aqua-terrariums and the like, each suction cup comprising a central part for fixing to said supporting portion of the apparatus, and a partial vacuum dome, adapted to be pressed against an adhesion surface, said fixing device being **characterized in that** each suction cup has, at said central part, a fluid passage orifice which is blocked by a flow control element, which is supported by means for its reversible movement in a direction for the at least partial opening of said orifice.

Further characteristics and advantages of the invention will become more apparent from the description of a preferred but not exclusive embodiment of the fixing device according to the invention, illustrated by way of non-limiting example in the accompanying drawings, wherein:

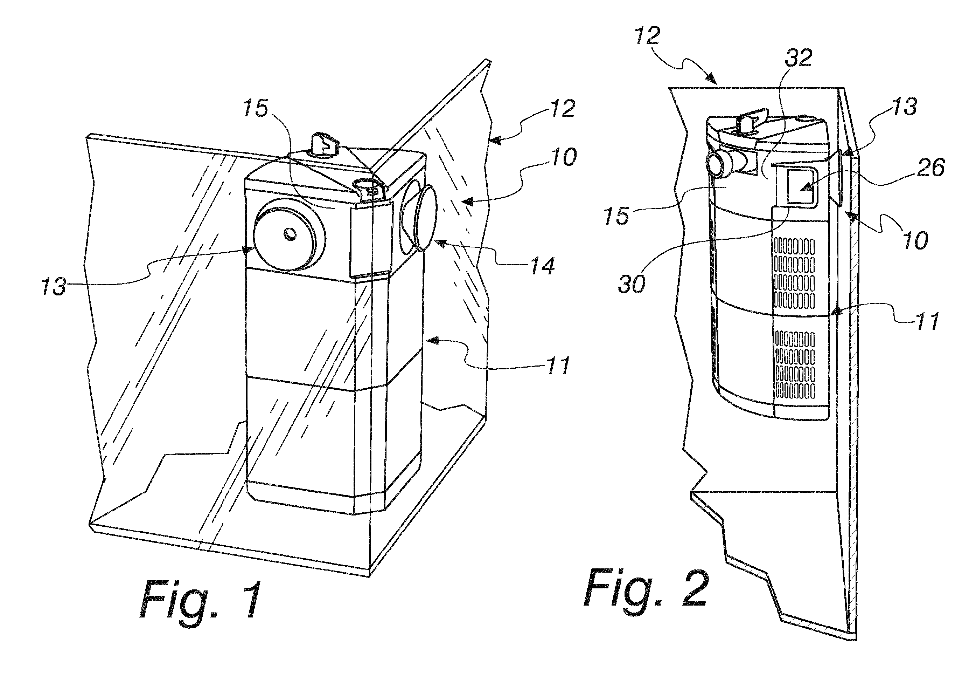

Figure 1 is a first perspective view of an apparatus for aquariums provided with a fixing device according to the invention;
Figure 2 is a second perspective view of the apparatus of Figure 1;

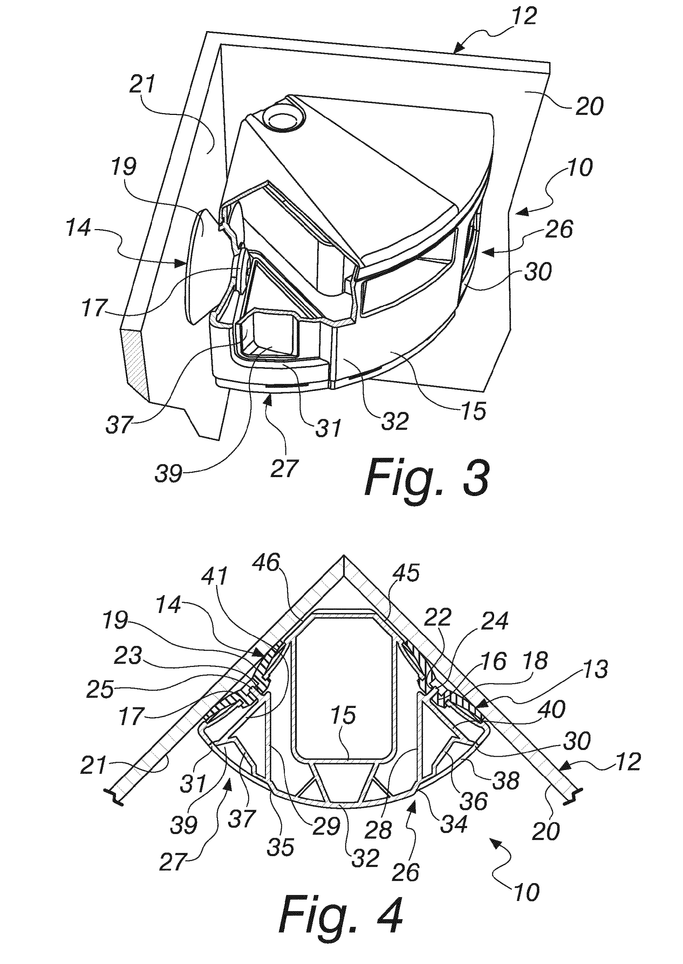

Figure 3 is a partially cutout perspective view of the fixing device according to the invention;
Figure 4 is a plan view of the fixing device according to the invention in the fixing configuration;
Figure 5 is a plan view of the fixing device according to the invention in the removal configuration;
Figure 6 is a plan view of a constructive variation of a fixing device according to the invention.

With reference to the cited figures, a device for fixing apparatuses for aquariums, aqua-terrariums and the like to a surface of the aquarium, aqua-terrarium or the like is generally designated by the reference numeral 10.

The fixing device 10 is, by way of example, described as part of a cartridge filtering apparatus 11 for aquariums.

The numeral 12 designates the walls of an aquarium, again by way of example of the invention.

The fixing device 10 is of the type that comprises two suction cups 13 and 14 respectively, which are fixed to a supporting portion 15 of the aquarium apparatus 11.

Each suction cup 13 and 14 comprises a central part, respectively 16 and 17, for fixing to the supporting portion 15 of the apparatus 11, and a partial vacuum dome 18 and 19, which is adapted to be pressed against an adhesion surface 20 and 21 of said aquarium 12.

Each suction cup 13 and 14 has, at the central part 16 and 17, a fluid passage orifice 22 and 23, which is blocked by a corresponding flow control element 24 and 25 respectively.

Each flow control element 24 and 25 is supported by means, generally designated by the numerals 26 and 27, for its reversible movement in a direction for the at least partial opening of the corresponding orifice 22 and 23.

In the embodiment of the invention described herein by way of non-limiting example of the invention, the flow control element 24 and 25 is constituted by a cylindrical protrusion, which is inserted with interference in the corresponding orifice 22 and 23 provided on the axis of symmetry of the suction cup 13 and 14.

The means 26 and 27 for reversible movement for each one of the flow control elements 24 and 25 comprise, for each one of them, a cantilever arm 28 and 29 that is elastically deformable and can be actuated by means of an access opening 30 and 31 formed in a corresponding exposed wall 32 of the supporting portion 15 of the apparatus 11.

The cantilever arm 28 and 29 is connected to an edge of the access opening 30 and 31 by means of a corresponding elastically deformable bridge 34 and 35.

The cantilever arm 28 and 29 has a maneuvering portion 36 and 37 respectively, which extends transversely from the cantilever arm 28 and 29 and is adapted to receive pressure from one or more fingers of a hand of a user.

This maneuvering portion 36 and 37 advantageously has an ergonomic recess 38 and 39 that is adapted to facilitate the correct positioning of a first phalanx of a finger of a user.

The cantilever arm 28 and 29 is completed by a flat portion 40 and 41 for thrust transmission, which extends between the maneuvering portion 36 and 37 and the free end of the cantilever arm 28 and 29, with the cylindrical protrusion 24 and 25 that protrudes at the region for joining the cantilever arm and the flat thrust transmission portion.

Advantageously, the supporting portion 15, the cantilever arms 28 and 29, the maneuvering portions 36 and 37, the flat portions 40 and 41 for thrust transmission, and the cylindrical protrusions 24 and 25 that protrude from them are provided monolithically by molding plastic material.

The central parts 16 and 17 of the suction cups 13 and 14 are button-shaped and are inserted with snap engagement in corresponding holes provided in the non-exposed walls 45 and 46 of the supporting portion, in a manner known per se.

The suction cups 13 and 14 are of course made of rubber, or other plastic material that has a similar and equivalent consistency and is elastically deformable.

In the constructive example of the fixing device 10 described herein, the two suction cups 13 and 14 are arranged at 90° to each other and the reversible movement means 26 and 27 for the flow control elements 24 and 25 are arranged at such a distance that they can be both maneuvered with only one hand, for example with the thumb pressing on a first maneuvering portion 36 of a first cantilever arm 28 and the index finger and middle finger acting on the second maneuvering portion 37 of the second cantilever arm 29.

In this manner one achieves the simultaneous movement of the flow control elements 24 and 25 in a substantially radial direction with respect to the axis of the corresponding orifice 22 and 23, with partial opening of said orifices, and the flow of water into the partial vacuum domes 18 and 19 and the substantially simultaneous separation of the two suction cups 13 and 14.

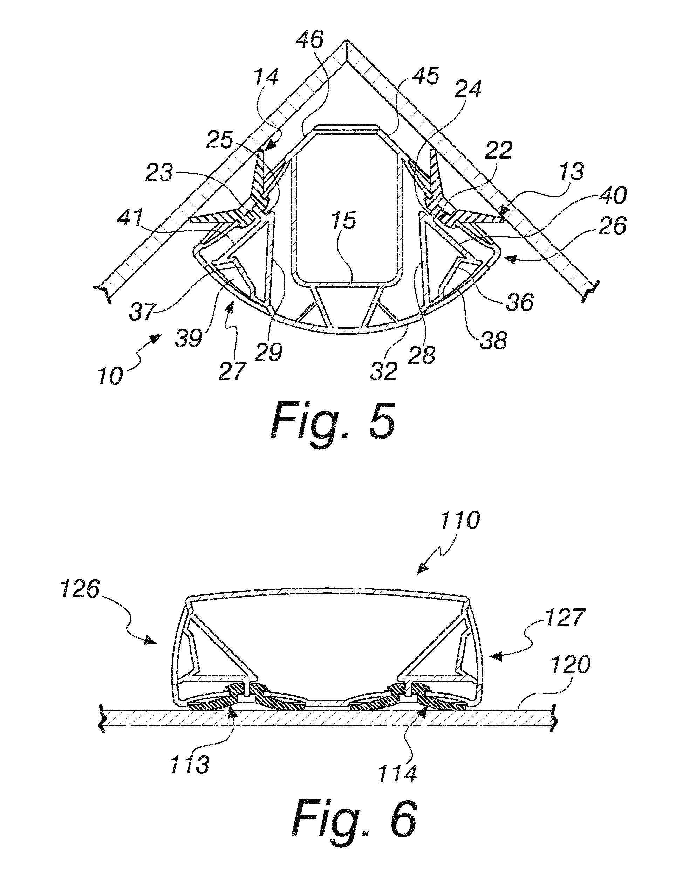

Figure 6 illustrates a constructive variation of the fixing device according to the invention, designated therein by the reference numeral 110.

In this constructive example, the reversible movement means 126 and 127 support suction cups 113 and 114 that are arranged with mutually parallel axes, thus allowing the fixing of an associated apparatus with a single flat surface 120 instead of two surfaces 20 and 21 that are mutually perpendicular as in the first constructive example described above.

The number of suction cups is understood to be optionally even larger than two, depending on the needs and the technical requirements of the apparatus with which the fixing device is associated.

In practice it has been found that the invention achieves the intended aim and objects.

In particular, the invention provides a fixing device that makes it easier to detach the suction cups from the glass, an operation that is necessary whenever the filter gets dirty or there are problems in the operation of the pumping system.

In fact, the invention provides a fixing device that can be handled easily even with only one hand and is simple and immediately usable in an intuitive manner.

Furthermore, the invention provides a fixing device that allows the quick and safe removal of an apparatus from the tank in which it is inserted thanks to the flow control element and the corresponding orifice, which, with the simultaneous opening that can be provided with one hand, avoids the dangerous shaking of the aquarium and therefore the risk of damaging anything contained therein and anything that is nearby.

Moreover, the invention provides a device for fixing apparatuses for aquariums, aqua-terrariums and the like to a surface of the aquarium, aqua-terrarium or the like that can be manufactured with known systems and technologies.

The invention thus conceived is susceptible of numerous modifications and variations, all of which are within the scope of the appended claims; all the details may further be replaced with other technically equivalent elements.

In practice, the materials used, as long as they are compatible with the specific use, as well as the contingent shapes and dimensions, may be any according to the requirements and the state of the art.

The disclosures in Italian Patent Application No. PD2012A000359 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (10) for fixing apparatuses (11) for aquariums, aqua-terrariums and the like to a surface of said aquarium (12), aqua-terrarium or the like, of the type comprising at least two suction cups (13, 14) fixed to a supporting portion (15) of an apparatus for aquariums (11), aqua-terrariums or the like, each suction cup (13, 14) comprising a central part (16, 17) for fixing to said supporting portion (15) of the apparatus (11), and a partial vacuum dome (18, 19) adapted to be pressed against an adhesion surface (20, 21) of said aquarium (12), aqua-terrarium or the like, said fixing device (10) being **characterized in that** each suction cup (13, 14) has, at said central part (16, 17), an orifice (22, 23) for the passage of fluids, which is blocked by a corresponding flow control element (24, 25), the latter being supported by means (26, 27) for its reversible movement in a direction for the at least partial opening of said orifice (22, 23).

2. The fixing device according to claim 1, **characterized in that** the flow control element (24, 25) is constituted by a cylindrical protrusion, which is inserted with interference in a corresponding orifice (22, 23) provided on the axis of symmetry of the corresponding suction cup (13, 14).

3. The fixing device according to claim 1, **characterized in that** said means (26, 27) for reversible movement for each one of said flow control elements (24, 25) comprise, for each one of them, a cantilever arm (28, 29) that is elastically deformable and can be actuated by means of an access opening (30, 31) that is formed in a corresponding exposed wall (32) of said supporting portion (15) of the apparatus (11).

4. The fixing device according to claim 3, **characterized in that** said cantilever arm (28, 29) is connected to an edge of the access opening (30, 31) by means of a corresponding elastically deformable bridge (34, 35).

5. The fixing device according to claim 3 or 4, **characterized in that** said cantilever arm (28, 29) has a maneuvering portion (36, 37) that extends transversely from said cantilever arm (28, 29) and is adapted to receive pressure by one or more fingers of a hand of a user.

6. The fixing device according to claim 5, **characterized in that** said maneuvering portion (36, 37) advantageously has an ergonomic recess (38, 39) that is adapted to facilitate the correct placement of a first phalanx of a finger of a user.

7. The fixing device according to claim 5, **characterized in that** said cantilever arm (28, 29) comprises a flat portion (40, 41) for thrust transmission, which lies between the maneuvering portion (36, 37) and the free end of the cantilever arm (28, 29).

8. The fixing device according to claim 7, **characterized in that** said flow control element (24, 25) protrudes at the joining region between the cantilever arm and the flat thrust transmission portion.

9. The fixing device according to claim 7, **characterized in that** said supporting portion (15), said cantilever arms (28, 29), said maneuvering portions (36, 37), said flat thrust transmission portions (40, 41) and the cylindrical protrusions (24, 25) that protrude from them are provided monolithically by molding plastic material.
